# FASCICULE DE BREVET EUROPEEN

(11) **EP 0 631 912 B1**
(45) Date de publication et mention de la délivrance du brevet: **22.01.1997**
(21) Numéro de dépôt: 94108532.6
(22) Date de dépôt: 03.06.1994
(51) Int. Cl.: B60R 25/02

(54) **Antivol de direction pour véhicule automobile**
Lenkradschloss für Kraftfahrzeuge
Steering lock for motor vehicles

(30) Priorité: 09.06.1993 FR 9306914
(43) Date de publication de la demande: 04.01.1995
(73) Titulaire: VALEO SECURITE HABITACLE, 78290 Croissy-Sur-Seine (FR)
(72) Inventeur: Canard, Louis, F-58000 Nevers (FR)
(74) Mandataire: Gamonal, Didier

(56) Documents cités:
- AU-B- 442 130
- GB-A- 2 042 621

## Description

La présente invention concerne d'une manière générale un antivol de direction pour véhicule automobile.

Elle concerne plus particulièrement un antivol du type décrit dans le GB-A-2042621 comprenant une serrure à barillet équipée d'une came de commande et un pêne de verrouillage rappelé par ressort en position de verrouillage pour bloquer la colonne de direction du véhicule.

Ledit pêne est en général solidaire d'une pièce de verrouillage ou tirette pouvant coulisser sous l'action de la rotation de la came de commande par manoeuvre d'une clé conforme introduite dans le barillet de la serrure pour amener le pêne en position de déverrouillage.

La tirette et donc le pêne sont maintenus en position de déverrouillage, après retour de la came de commande dans sa position initiale par un organe de blocage ou levier de sécurité qui vient s'encliqueter dans la tirette et qui ne peut la libérer qu'après extraction complète de la clé, par l'intermédiaire d'un palpeur de clé et d'un coulisseau.

En général le levier de sécurité pivote autour d'au moins un moyen d'articulation et vient occuper sa position de verrouillage de la tirette sous l'action d'un ressort.

Malgré toutes les précautions prises lors de la conception et de la fabrication d'un antivol de ce type, l'organe de blocage peut ne pas prendre sa position normale de verrouillage de la tirette, donc maintenir le pêne en position de déverrouillage et empêcher par conséquent toute manoeuvre du véhicule.

Ce non fonctionnement peut avoir pour cause par exemple des impuretés introduites dans le corps de l'antivol qui provoquent un freinage du pivotement du levier de sécurité, freinage qui ne peut être vaincu par la seule force du ressort.

Une solution à ce problème peut consister à augmenter la force du ressort, avec pour résultat un inconfort pour l'utilisateur dû à l'effort demandé pour vaincre la force du ressort lors par exemple de l'introduction de la clé dans la serrure.

Le problème reste entier si le ressort d'actionnement du levier de sécurité n'exerce plus son rôle par suite d'un coincement ou d'une cassure.

La présente invention a pour but d'assurer dans tous les cas le rôle du levier de sécurité c'est-à-dire le blocage en position de déverrouillage de l'ensemble tirette-pêne et ceci sans compliquer l'ensemble du mécanisme de l'antivol et sans augmenter son coût.

A cet effet la présente invention propose un antivol de direction pour véhicule automobile comprenant un corps, une serrure solidaire d'une came de commande apte, sous l'action d'une clé conforme à entraîner une pièce de verrouillage ou tirette solidaire d'un pêne dans un mouvement de translation parallèle à l'axe de l'antivol d'une position de verrouillage à une position de déverrouillage, l'antivol comprenant en outre un palpeur de clé apte à déplacer radialement un coulisseau solidaire d'un levier, des premiers moyens de pivotement du levier pour amener ledit levier à une condition de blocage de la tirette dans une position de déverrouillage, caractérisé en ce que l'antivol comporte des seconds moyens de pivotement du levier.

Selon d'autres caractéristiques de l'invention :
- les seconds moyens de pivotement du levier sont constitués par une face d'appui de la tirette apte à coopérer avec une branche secondaire du levier,
- la branche secondaire présente un pan incliné.

L'invention sera mieux comprise avec la description qui va suivre en regard des dessins annexés dans lesquels :
- la figure 1 est une vue en perspective avec arrachement partiel d'une partie de l'antivol selon l'invention dans une première position de fonctionnement;
- les figures 2 et 3 sont des vues identiques à la figure 1 pour des seconde et troisième positions de fonctionnement;
- la figure 4 est une vue en plan d'un organe de blocage de l'antivol;
- la figure 5 est une vue latérale dudit organe de blocage;
- la figure 6 est une vue illustrant les positions relatives de deux éléments de l'antivol dans deux conditions de fonctionnement différentes.

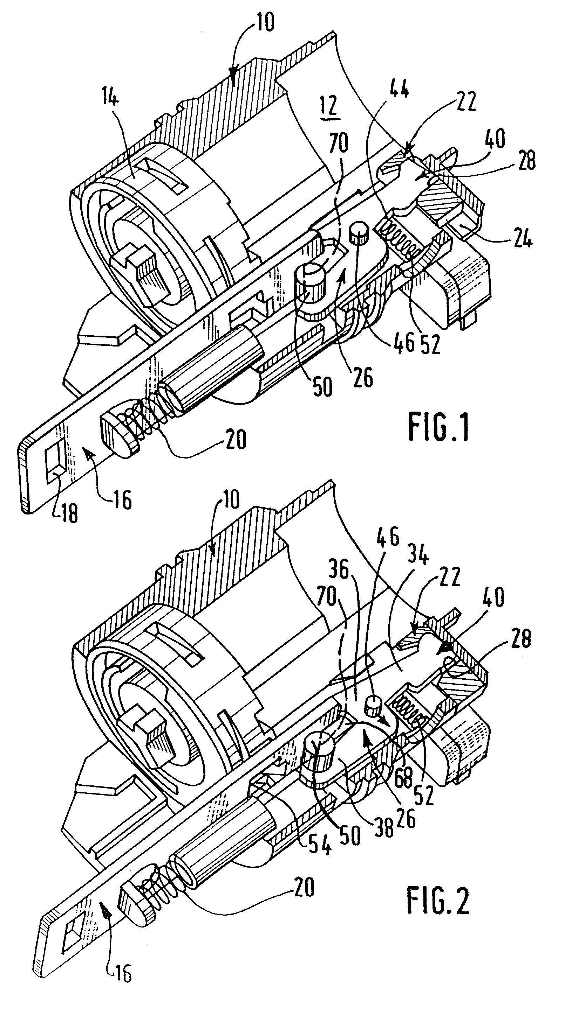

On se réfère tout d'abord à la figure 1 qui représente l'antivol en position de verrouillage, la clé n'étant pas introduite dans le barillet de la serrure.

L'ensemble des différents constituants de l'antivol est contenu dans un corps 10 dans lequel est ménagé un logement globalement cylindrique 12 destiné à recevoir une serrure (non représentée).

De manière connue en soi la serrure est équipée d'une came de commande 14 pouvant opérer un mouvement de rotation sous l'action de la manoeuvre d'une clé conforme introduite dans la serrure et apte à entraîner en translation une pièce de verrouillage ou tirette 16 par des moyens, qui ne faisant pas partie de la présente invention ne seront pas décrits ici plus en détail.

La tirette 16 comporte à l'une de ses extrémités un crevé 18 destiné à l'accrochage d'un pêne (non représenté) qui, en position de verrouillage, bloque en rotation la colonne de direction du véhicule.

La tirette 16 et donc le pêne sont rappelés en position de verrouillage par un ressort de verrouillage 20.

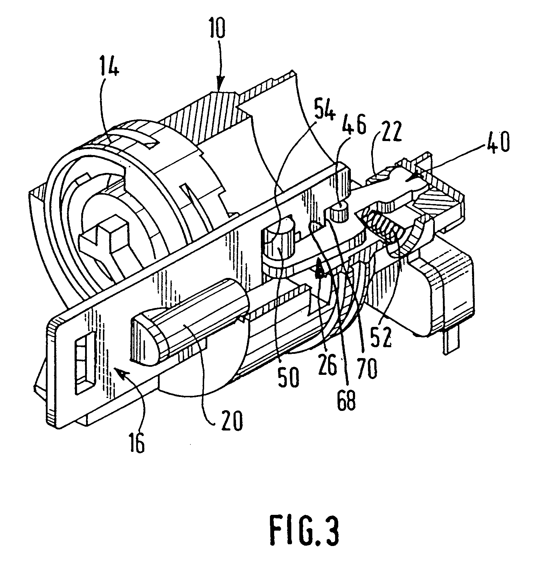

Sous l'action de la came de commande 14, la tirette 16 est entrainée dans un mouvement de translation parallèle à l'axe de l'antivol entre une position de verrouillage, représentée figures 1 et 2 et une position de déverrouillage représentée figure 3.

L'antivol comprend également un coulisseau 22 apte à se déplacer dans un logement radial 24 du corps de l'antivol 10 et un organe de blocage ou levier de sécurité 26 pouvant pivoter dans des conditions qui seront explicitées plus avant.

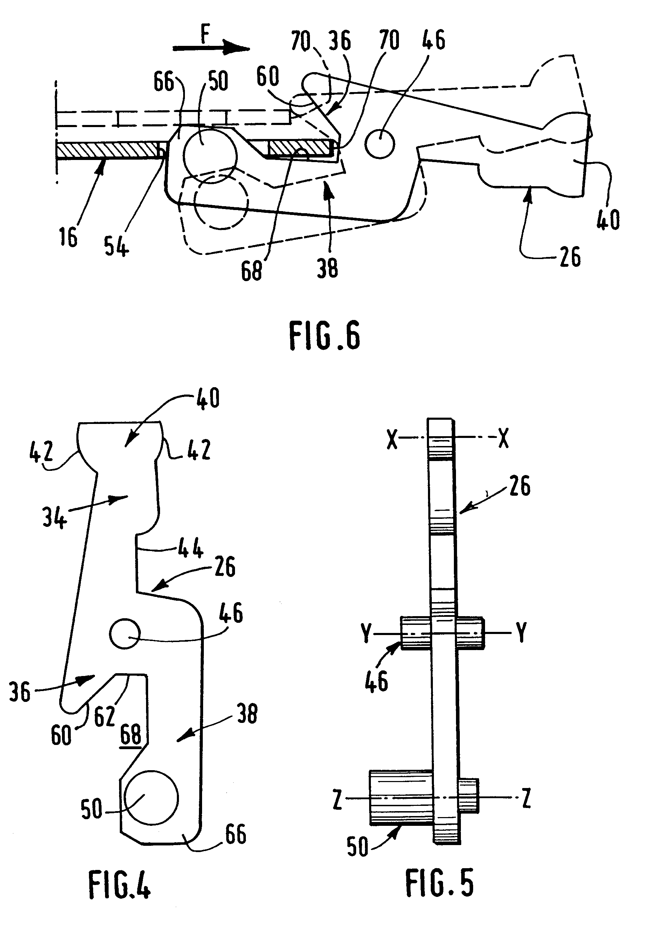

Ainsi qu'illustré sur les figures 4 et 5 l'organe de blocage ou levier de sécurité 26 est réalisé sous la forme d'une plaque prédécoupée et comporte une branche principale 34 se prolongeant par deux branches secondaires 36,38 de longueurs différentes.

La branche principale 34 présente à l'une de ses extrémités une rotule 40 constituée par deux flancs bombés 42 constituant un premier moyen d'articulation du levier 26 suivant un axe X-X. La branche principale 34 comprend en outre un décrochement 44 formant plaque d'appui pour un ressort 52 (figures 1 à 3).

Dans la partie de raccordement des branches 34,36,38, le levier 26 comporte un axe central 46 faisant saillie par rapport à chacune de ses faces et constituant un second moyen d'articulation dudit levier 26 suivant un axe Y-Y.

La branche secondaire la plus courte 36 se présente sous la forme d'un nez à extrémité arrondie se raccordant à la branche secondaire 38 par un pan incliné 60 et une face radiale 62.

La branche secondaire la plus longue 38 présente une extrémité élargie 66, dans laquelle est agencé un élément de blocage sous la forme d'un pion cylindrique 50 constituant un troisième moyen d'articulation du levier 26 suivant un axe Z-Z.

L'extrémité élargie 66 se raccorde à la face radiale 62 par une face plane 64 de manière à constituer avec le nez 60 un logement 68.

En se référant aux figures 1 à 3 l'antivol comprend également un ressort de rappel 52 agissant en une paroi du corps 10 et le décrochement ou plage d'appui 44.

La rotule 40 du levier 26 vient se loger dans une rainure débouchante 28 ménagée dans le coulisseau 22.

La tirette 16 présente une encoche rectangulaire 54 dont le rôle sera explicité ci-après et du côté opposé au crevé 18 une face d'appui 70.

Le fonctionnement d'un tel antivol est le suivant:

Sur la figure 1, la clé n'étant pas introduite dans la serrure, le coulisseau 22 est en position haute grâce au ressort de rappel 52, et l'organe de blocage ou levier de sécurité 26 est en appui contre la tirette 16 par son élément de blocage 50 : tirette et pêne associé sont maintenus en position de verrouillage par le ressort de verrouillage 20 : la colonne de direction est immobilisée en rotation.

Lors de l'introduction d'une clé conforme dans la serrure, un palpeur de clé (non représenté) repousse radialement le coulisseau 22 (figure 2), le levier 26 pivote autour du pion 50 à l'encontre du ressort de rappel 52 ce qui provoque un déplacement radial vers l'extérieur de l'axe 46.

De ce fait, l'action de rotation exercée par le resort 52 sur le levier 26 est inversée : ce n'est plus la branche 34 mais ses branches secondaires 36,38 qui sont rappelées vers l'axe de l'antivol.

La rotation de la clé dans la serrure entraîne une rotation de la came de commande 14 et donc un coulissement axial de la tirette 16 à l'encontre du ressort de verrouillage 20 comme représenté figure 3.

Dans des conditions normales de fonctionnement, lorsque l'encoche 54 de la tirette 16 arrive en vis-à-vis de l'extrémité élargie 66, le ressort 52 provoque un pivotement complémentaire du levier 26 et le pion 50 pénètre dans l'encoche 54 et y est maintenu immobilisant en translation la tirette 16 en position de déverrouillage du pêne. L'extrémité de la tirette 16 vient se placer dans le logement 68 du levier 26.

Autrement dit le ressort 52 constitue des premiers moyens de pivotement du levier 26 pour amener ledit levier à une condition de blocage de la tirette 16 dans une position de déverrouillage.

En cas de disfonctionnement dû au ressort 52 ou à un blocage en rotation du levier 26, ce dernier reste dans la position représentée en traits mixtes (figure 6) et l'extrémité élargie 66 ne pénètre pas dans l'encoche 54.

Afin de remédier à cet inconvénient, l'antivol comporte des seconds moyens de pivotement du levier 26 qui opèrent de la manière suivante.

Si le levier 26 reste dans la position indiquée en traits mixtes sur la figure 6 une surcourse de la came de commande 14 amène la face d'appui 70 de la tirette 16 en contact avec le pan incliné 60 de la branche secondaire 36. En continuant de coulisser suivant la flèche F de la figure 6, la face 70 de la tirette 16 provoque une rotation du levier 26 avec comme résultat la pénétration de l'extrémité élargie 66 du levier 26 dans l'encoche 54 : le blocage de la tirette est effectué.

Bien entendu la présente invention n'est pas limitée aux formes de réalisations décrites ou représentées mais englobe toute variante que l'homme de l'art pourrait y apporter.

## Revendications

1. Antivol de direction pour véhicule automobile comprenant un corps (10), une serrure solidaire d'une came de commande (14) apte, sous l'action d'une clé conforme à entraîner une pièce de verrouillage ou tirette (16) solidaire d'un pêne dans un mouvement de translation parallèle à l'axe de l'antivol d'une position de verrouillage à une position de déverrouillage, l'antivol comprenant en outre un palpeur de clé apte à déplacer radialement un coulisseau (22) solidaire d'un levier (26), des premiers moyens de pivotement (52) du levier (26) pour amener ledit levier à une condition de blocage de la tirette (16) dans une position de déverrouillage, caractérisé en ce que l'antivol comporte des seconds moyens de pivotement (36,70) du levier.

2. Antivol selon la revendication 1, caractérisé en ce que les seconds moyens de pivotement du levier sont constitués par une face d'appui (70) de la tirette (16) apte à coopérer avec une branche secondaire (36) du levier (26).

3. Antivol selon la revendication 2, caractérisé en ce que la branche secondaire (36) présente un pan incliné (60).

## Claims

1. Steering anti-theft device for a motor vehicle comprising a body (10), a lock integral with a control cam (14) able, under the action of a suitable key, to drive a locking piece or draw member (16) integral with a bolt in a translational movement parallel to the axis of the anti-theft device from a locking position to an unlocking position, the anti-theft device also comprising a key sensor able to radially move a slide (22) integral with a lever (26), first means (52) of pivoting the lever (26) in order to bring the said lever to a condition of locking the draw member (16) in an unlocking position, characterised in that the anti-theft device includes second means (36, 70) of pivoting the lever.

2. Anti-theft device according to Claim 1, characterised in that the second means of pivoting the lever consist of a bearing face (70) for the draw piece (16) able to cooperate with a secondary arm (36) of the lever (26).

3. Anti-theft device according to Claim 2, characterised in that the secondary arm (36) has an inclined face (60).

## Patentansprüche

1. Lenkradschloß für Kraftfahrzeuge, bestehend aus einem Gehäuse (10), einem Schloß, das fest mit einem Betätigungsnocken (14) verbunden ist, der unter der Einwirkung eines passenden Schlüssels ein fest mit einem Riegel verbundenes Verriegelungs- oder Zugstück (16) in einer geradlinigen Bewegung parallel zur Lenkradschloßachse von einer Verriegelungsposition in eine Entriegelungsposition bewegen kann, wobei das Lenkradschloß außerdem einen Schlüsseltaster, der ein fest mit einem Hebel (26) verbundenes Gleitstück (22) radial verschieben kann, und erste Schwenkmittel (52) zum Verschwenken des Hebels (26) umfaßt, um den besagten Hebel in einen Sperrzustand des Zugstücks (16) in einer Entriegelungsposition zu bringen , **dadurch gekennzeichnet,** daß das Lenkradschloß zweite Schwenkmittel (36, 70) zum Verschwenken des Hebels umfaßt.

2. Lenkradschloß nach Anspruch 1, **dadurch gekennzeichnet**, daß die zweiten Schwenkmittel des Hebels aus einer Auflagefläche (70) des Zugstücks (16) bestehen, die mit einem Nebenschenkel (36) des Hebels (26) zusammenwirken kann.

3. Lenkradschloß nach Anspruch 2, **dadurch gekennzeichnet**, daß der Nebenschenkel (36) ein geneigtes Teilstück (60) aufweist.
